# FASCICULE DE BREVET EUROPEEN

(11) **EP 0 779 022 B1**
(45) Date de publication et mention de la délivrance du brevet: **05.12.2001**
(21) Numéro de dépôt: 96440111.1
(22) Date de dépôt: 12.12.1996
(51) Int. Cl.: A01D 78/10

(54) **Machine de fenaison**
Heuwerbungsmaschine
Haymaking machine

(30) Priorité: 15.12.1995 FR 9515314
(43) Date de publication de la demande: 18.06.1997
(73) Titulaire: KUHN S.A., 67700 Saverne (FR)
(72) Inventeur: Haberkorn, Jean-Paul, 67700 Monswiller (FR); Lechner, Jean-Claude, 67270 Saessolsheim (FR); Aron, Jérôme, 67330 Dossenheim-sur-Zinsel (FR)
(74) Mandataire: Andres, Jean-Claude

(56) Documents cités:
- EP-A- 0 317 746
- EP-A- 0 642 733
- DE-A- 2 833 814
- DE-U- 9 002 630
- FR-A- 2 016 419
- FR-A- 2 649 286

## Description

La présente invention se rapporte à une machine de fenaison, notamment une andaineuse de végétaux fauchés, comportant un bâti portant des rotors d'andainage qui sont entraînés en rotation autour d'axes sensiblement verticaux durant le travail, lequel bâti comporte un premier rotor et possède une poutre de liaison qui est articulée sur un axe sensiblement vertical et comporte un deuxième rotor qui se situe à une certaine distance du premier rotor.

Sur une machine de ce genre, connue dans le brevet FR 2 016 419, une poutre de liaison rigide relie les deux rotors entre eux. De ce fait, ces rotors ne peuvent pas suivre correctement les dénivellations du sol durant le travail. Il peut arriver qu'un des rotors soit partiellement soulevé par suite du passage de l'autre rotor sur une bosse. Dans ce cas il ne ramasse pas la totalité des végétaux qui se trouvent sur le sol, ce qui est préjudiciable à la qualité du travail d'andainage.

Sur une autre machine connue (brevet FR 2 649 286) le premier rotor est lié à un bras de traction. Le second rotor est articulé à l'extrémité arrière d'une poutre de liaison au moyen de deux articulations sphériques. L'extrémité avant de cette poutre est articulée sur le bras de traction au moyen d'une autre articulation sphérique située devant l'axe de rotation du premier rotor. Dans ce cas le second rotor peut se déplacer brusquement dans toutes les directions et manque de stabilité lorsque la machine roule sur un terrain fortement dénivelé.

La présente invention a pour but de proposer une machine telle que décrite dans l'introduction et n'ayant pas les inconvénients précités des machines connues.

A cet effet, une importante caractéristique de l'invention consiste en ce que la poutre de liaison se compose de deux parties articulées entre elles au moyen d'un axe d'articulation transversal qui est sensiblement horizontal et permet au second rotor de se déplacer en hauteur par rapport au premier rotor, que la deuxième partie de la poutre comporte une articulation longitudinale permettant au second rotor de pivoter autour d'un axe géométrique longitudinal de la poutre et qu'elle comporte un dispositif de limitation des pivotements autour de cet axe longitudinal qui comprend des butées et des arrêts comportant des amortisseurs.

Cet agencement simple permet à chaque rotor de se déplacer indépendamment de l'autre. Chacun peut suivre correctement la surface du sol et ramasser la totalité du fourrage qui s'y trouve. De plus, les pivotements du second rotor autour de l'axe longitudinal de la poutre sont limités et amortis de manière à éviter un éventuel renversement de celui-ci.

D'autres caractéristiques et avantages de l'invention ressortiront de la description qui va suivre et qui se réfère aux dessins annexés qui représentent, à titre d'exemple non limitatif, une forme de réalisation de la machine selon l'invention.

Sur ces dessins :
- la figure 1 représente une vue de dessus d'une machine selon l'invention en position de travail ;
- la figure 2 représente une vue de dessus de la machine selon l'invention en position de transport ;
- la figure 3 représente une coupe du premier rotor suivant un plan sensiblement vertical ;
- la figure 4 représente une coupe du deuxième rotor suivant un plan sensiblement vertical ;
- la figure 5 représente une vue de détail d'une partie de la machine ;
- la figure 6 représente une coupe suivant le VI - VI de la figure 5.

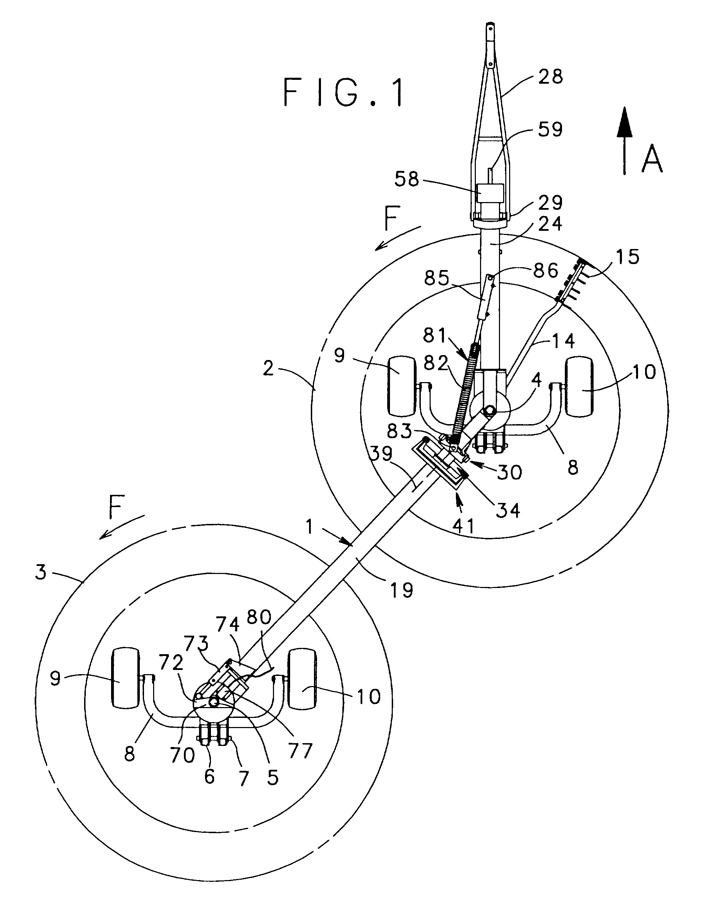

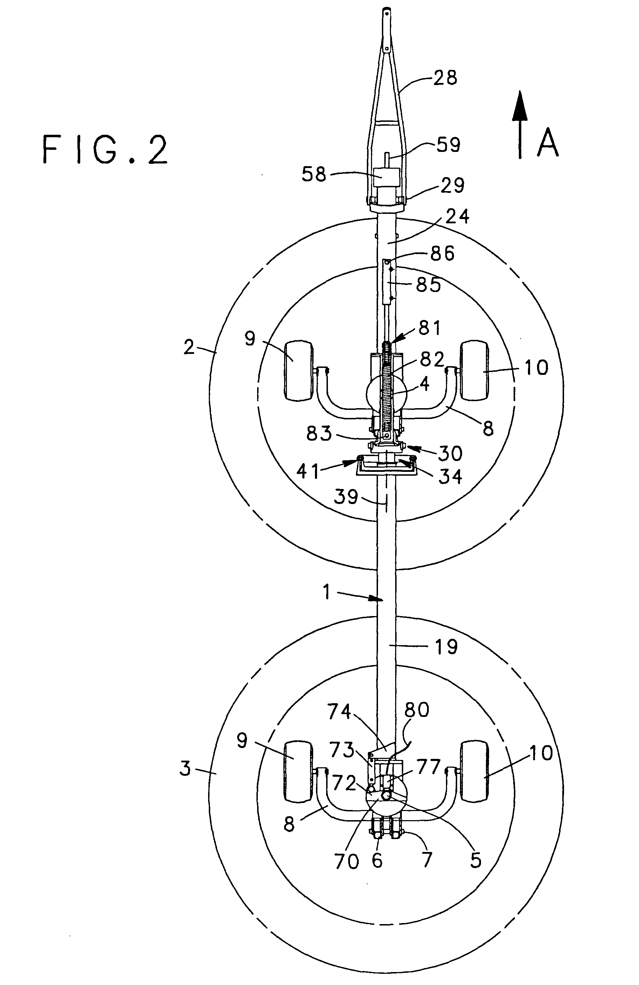

Telle qu'elle est représentée sur les figures 1 et 2, la machine selon l'invention comporte un bâti (1) qui porte deux rotors (2 et 3) d'andainage situés à une certaine distance l'un de l'autre. Ces rotors (2 et 3) sont montés rotatifs sur des axes (4 et 5) sensiblement verticaux. Chacun de ces axes (4 et 5) porte à son extrémité inférieure un support (6) sur lequel est articulé au moyen d'un axe (7) un cintre (8) muni de deux roues porteuses (9 et 10). Entre chaque support (6) et des pattes (11) solidaires du cintre (8) correspondant est disposé un vérin hydraulique (12). Celui-ci permet de déplacer le cintre (8) autour de son articulation (7) avec le support (6) en vue de modifier la distance du rotor (2, 3) correspondant par rapport au sol.

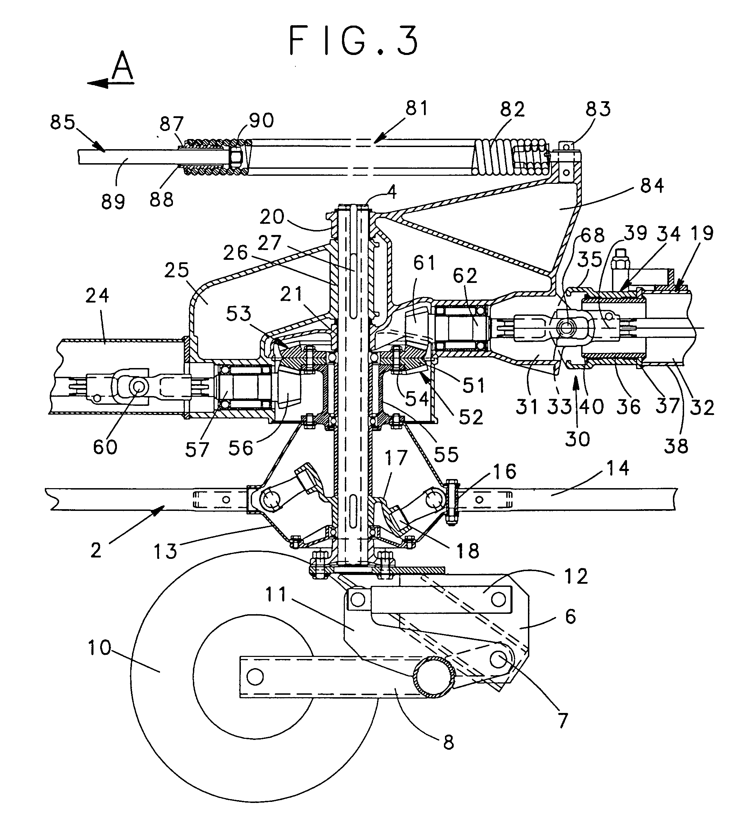

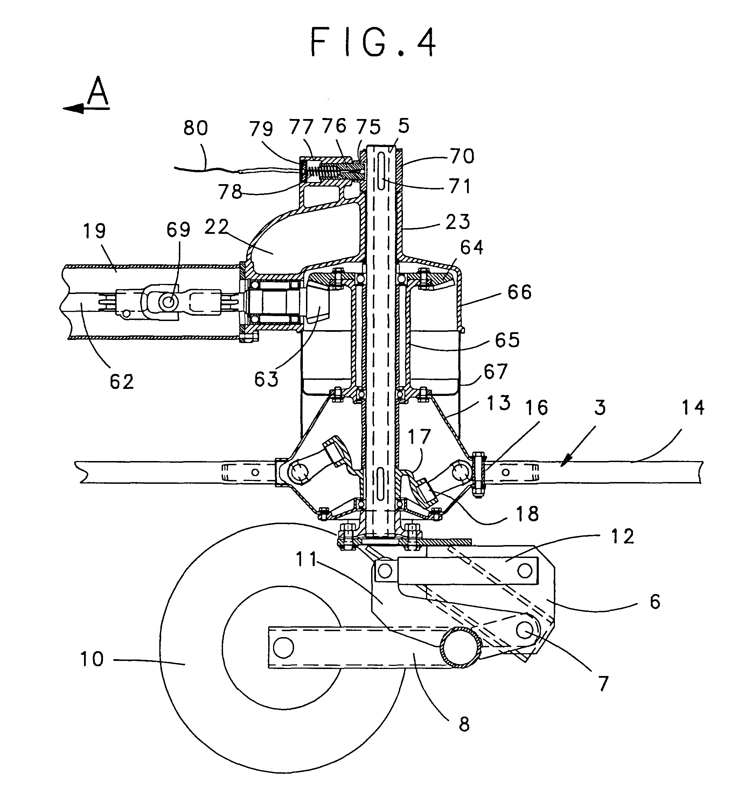

Il ressort des figures 3 et 4 que chaque rotor (2, 3) se compose essentiellement d'un carter central (13) qui est monté sur l'axe (4, 5) correspondant au moyen de roulements à billes. Ce carter central (13) porte plusieurs bras (14) qui s'étendent dans un plan pratiquement horizontal. Ceux-ci sont munis à leurs extrémités les plus éloignées dudit carter (13) de fourches de râtelage (15). Ces bras (14) sont montés dans des paliers (16) dudit carter (13) de manière à pouvoir pivoter sur eux-mêmes c'est-à-dire autour de leurs axes géométriques longitudinaux. Dans chaque carter central (13) se situe une came de commande (17) qui est fixée sur l'axe (4, 5) correspondant. Chaque bras porte-fourches (14) possède à son extrémité située à l'intérieur du carter (13) un galet (18) qui coopère avec ladite came de commande (17).

Une poutre de liaison (19) relie l'axe sensiblement vertical (4) du premier rotor (2) à l'axe (5) du deuxième rotor (3). L'extrémité avant de cette poutre (19) est articulée sur l'axe (4) du premier rotor (2) (voir figure 3). A cet effet, elle comporte deux paliers (20 et 21) avec des bagues lisses dans lesquelles passe l'axe (4). Grâce à celles-ci, la poutre (19) peut pivoter autour dudit axe (4), ce qui permet notamment de modifier la position du deuxième rotor (3) par rapport au premier rotor (2). L'extrémité arrière de la poutre (19) présente un coude (22) qui est articulé sur l'axe (5) du deuxième rotor (3). A cet effet, ce coude (22) comporte un palier (23) avec une bague lisse dans laquelle passe ledit axe (5). Celui-ci peut alors tourner sur lui-même par rapport à la poutre de liaison (19) (voir figure 4).

Une poutre de traction (24) est également fixée sur l'axe (4) sensiblement vertical du premier rotor (2). Elle comporte un coude (25) avec un palier (26) qui se situe entre les deux paliers (20 et 21) de la poutre de liaison (19). Elle est immobilisée en rotation sur cet axe (4) à l'aide d'une clavette (27). Cette poutre de traction (24) s'étend horizontalement vers l'avant (vu dans la direction d'avancement (A)). A son extrémité avant est articulé un timon (28) au moyen d'un axe (29). Celui-ci permet d'accrocher la machine à un tracteur. La position de ce timon (28) par rapport à la poutre (24) peut être réglable.

La poutre de liaison (19) comporte une articulation transversale (30). Cette poutre (19) se présente en deux parties (31 et 32) qui sont articulées entre elles par un axe (33) qui est transversal par rapport à la direction d'avancement (A) et sensiblement horizontal. La première partie (31) de la poutre (19) est articulée sur l'axe (4) sensiblement vertical du premier rotor (2). L'axe d'articulation (33) se situe à proximité dudit axe (4). De ce fait, la partie (32) qui est liée au deuxième rotor (3) est relativement longue, ce qui permet à ce dernier de se déplacer en hauteur d'une manière importante pour suivre les dénivellations du sol.

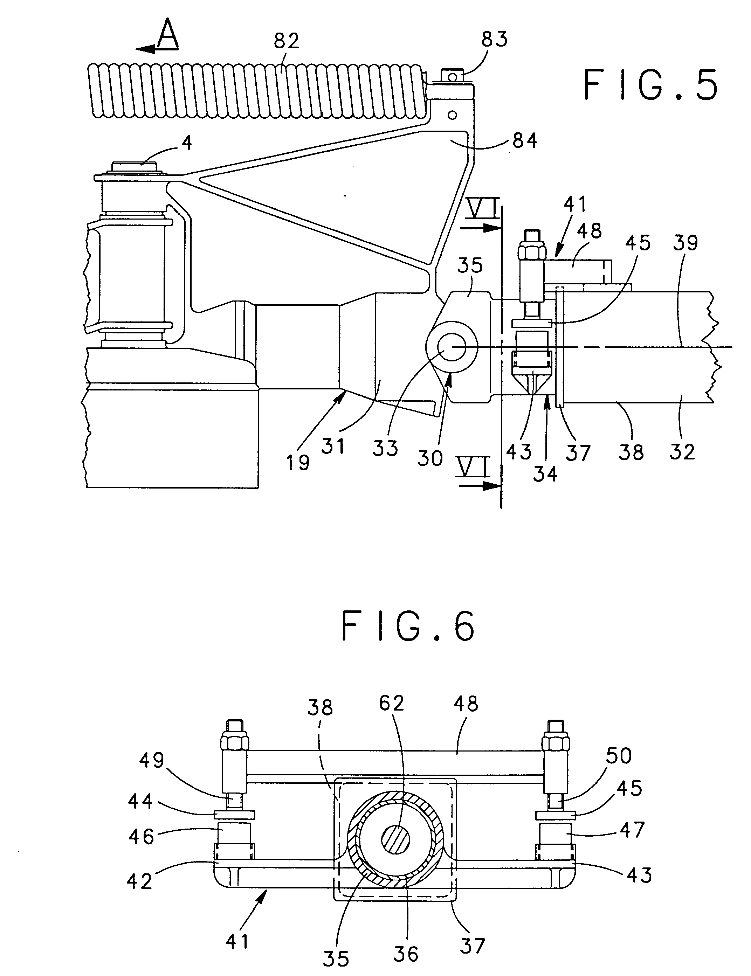

Il ressort clairement des figures 3, 5 et 6 que la poutre de liaison (19) comporte une articulation (34) dirigée dans la direction longitudinale. A cet effet, l'extrémité avant de la deuxième partie (32) est constituée par un manchon (35) qui est reliée à l'axe d'articulation transversal (33) et qui comporte un orifice intérieur de forme circulaire. Dans ce manchon (35) est logé un embout cylindrique (36) relativement court. Celui-ci est soudé sur une couronne (37) qui est elle même soudée sur un tube (38) qui constitue l'essentiel de la deuxième partie (32). Ledit embout (36) est guidé dans le manchon (35) au moyen de bagues lisses de sorte qu'il puisse tourner sur lui-même autour de l'axe géométrique longitudinal (39) de la deuxième partie (32) de la poutre (19). Il est immobilisé dans le sens axial, d'une part, par la couronne (37) et, d'autre part, par une bague d'arrêt (40). Cet agencement permet au tube (38) de la poutre (19) et au deuxième rotor (3) de pivoter autour de cet axe géométrique longitudinal (39) pour mieux suivre les dénivellations du sol. La poutre (19) comporte en sus un dispositif (41) de limitation des pivotements autour de l'axe longitudinal (39) (voir figures 5 et 6). Ce dispositif (41) se compose de deux arrêts (42 et 43) qui sont solidaires du manchon (35) et de deux butées (44 et 45) qui sont solidaires du tube (38). Les arrêts (42 et 43) et les butées (44 et 45) se situent de part et d'autre du manchon (35) et à une certaine distance de celui-ci. Ces arrêts (42 et 43) peuvent comporter des blocs amortisseurs (46 et 47) en caoutchouc ou une matière analogue.

Les butées (44 et 45) sont liées à un bras (48) qui est solidaire du tube (38). La position de ces butées (44 et 45) peut être réglable de manière à pouvoir modifier la distance entre elles et les arrêts (42 et 43). A cet effet elles sont fixées sur des tiges filetées (49 et 50) qui sont vissées dans des trous taraudés du bras (48).

Selon un autre exemple de réalisation non représenté un troisième rotor d'andainage analogue au rotor (3) est disposé derrière celui-ci, afin d'obtenir une largeur de travail plus importante. Ce troisième rotor d'andainage est relié à la poutre de liaison (19) au moyen d'une poutre supplémentaire qui comporte également une articulation transversale (30) et une articulation longitudinale (34) ainsi qu'un dispositif (41) de limitation des pivotements autour de ladite articulation longitudinale (34).

L'entraînement en rotation des deux rotors (2 et 3) est assuré mécaniquement à partir de l'arbre de prise de force du tracteur. A cet effet, le premier rotor (2) comporte une couronne dentée (51) avec deux dentures coniques (52 et 53). Elle est réalisée en deux parties assemblées entre elles à l'aide de boulons (54). Cette couronne (51) est fixée avec ces mêmes boulons (54) sur un flanc supérieur d'une entretoise (55) qui est par ailleurs fixée au carter central (13) du rotor (2). L'une (52) de ces dentures est dirigée vers le bas et engrène avec un premier pignon (56). Celui-ci est solidaire d'un arbre d'entraînement (57) qui s'étend dans le bras de traction (24) en direction du tracteur. Son extrémité avant se situe dans un carter de réduction (58) disposé à l'extrémité avant de la poutre de traction (24). Dans ce carter (58) ladite extrémité porte une roue dentée qui engrène avec une seconde roue dentée de plus petit diamètre. Celle-ci est montée sur un arbre (59) qui sort du carter (58) et qui peut être relié à l'arbre de prise de force du tracteur à l'aide d'un arbre à cardans intermédiaire qui n'est pas représenté.

Ledit arbre d'entraînement (57) est réalisé en deux parties reliées entre elles au moyen d'un joint universel (60) tel qu'un joint de cardan ou une articulation à doigts qui engrènent entre eux. Ce joint permet de remédier à un éventuel défaut d'alignement entre le premier pignon (56) et la roue dentée du carter de réduction (58) qui se situent tous les deux sur l'arbre d'entraînement (57).

La deuxième denture (53) est dirigée vers le haut et engrène avec un second pignon (61) qui se situe au-dessus d'elle. Ce second pignon (61) est solidaire d'un arbre de transmission (62) qui s'étend jusqu'au deuxième rotor (3) (voir figure 4).

L'extrémité arrière de cet arbre (62) porte un troisième pignon (63) qui engrène avec une couronne dentée (64) qui se situe au-dessus dudit troisième pignon (63). De ce fait, les deux rotors (2 et 3) sont entraînés en rotation dans le même sens. La couronne (64) est reliée au carter central (13) du deuxième rotor (3) au moyen d'une entretoise (65). Elle est entourée par un boîtier de protection (66) qui est solidaire de la poutre de liaison (19). L'entretoise (65) porte une collerette (67) qui s'étend du carter central (13) jusqu'au boîtier (66) et empêche l'arrivée de corps étrangers dans ce dernier.

L'arbre de transmission (62) est logé dans la poutre de liaison (19). Il pivote avec cette poutre autour de l'axe (4) sensiblement vertical du premier rotor (2). Le second pignon (61) se déplace alors sur la couronne (51). De ce fait, l'angle de pivotement de la poutre de liaison (19) peut être très important sans qu'il y ait un risque de rupture des moyens de transmission du mouvement d'entraînement.

Il ressort de la figure 3 que l'arbre de transmission (62) comporte un joint universel (68) tel qu'un joint de cardan ou une articulation à doigts qui engrènent, au niveau de l'axe d'articulation transversal (33) de la poutre de liaison (19). Ledit arbre (62) peut ainsi se déplacer en hauteur avec la partie arrière (32) de la poutre de liaison (19) et avec le second rotor (3) lorsque celui-ci passe sur des dénivellations du sol. L'arbre de transmission (62) comporte avantageusement un second joint universel (69) du type joint de cardan ou articulation à doigts (voir figure 4). Celui-ci se situe à proximité du troisième pignon (63). Il permet de remédier à un éventuel défaut d'alignement entre le troisième pignon conique (63) qui est disposé sur l'extrémité arrière de l'arbre de transmission (62) et son extrémité relativement éloignée qui est liée au premier joint universel (68).

L'extrémité supérieure de l'axe (5) sensiblement vertical du second rotor (3) porte un manchon (70). Celui-ci se situe au-dessus du palier (23) de la poutre de liaison (19) et est fixé sur l'axe (5) au moyen d'une clavette (71). Le manchon (70) possède un bras latéral (72) avec une chape qui sert à l'accrochage d'une tige d'un vérin hydraulique (73). Le corps de ce vérin (73) est articulé sur une chape (74) qui est solidaire de la poutre de liaison (19). Ledit vérin hydraulique (73) peut être commandé depuis le tracteur. Il permet de déplacer le manchon (70) de telle sorte qu'il fasse tourner l'axe (5) sensiblement vertical sur lui-même.

Ledit manchon (70) comporte en sus un logement de blocage (75) dans lequel peut s'engager un verrou (76) dans la position de transport. Ce verrou (76) est logé dans un fourreau (77) qui est solidaire du coude (22) de la poutre de liaison (19). Il peut se déplacer longitudinalement dans ce fourreau (77) de manière à ce que son extrémité puisse être retirée du logement de blocage (75) en vue de libérer le manchon (70) et l'axe (5) sensiblement vertical. Un ressort de pression (78) qui pousse le verrou (76) en direction du logement de blocage (75) est également placé dans le fourreau (77). D'un côté il s'appuie contre le verrou (76) et de l'autre côté contre une paroi d'obturation (79) du fourreau (77). Un câble de commande (80) qui s'étend jusqu'au siège du tracteur est attaché audit verrou (76). Ce câble (80) permet de tirer le verrou (76) à l'encontre de la force du ressort (78) en vue du déblocage du manchon (70) et de l'axe (5) sensiblement vertical du second rotor (3).

Un dispositif de maintien (81) est disposé entre la poutre de traction (24) et la poutre de liaison (19) en vue de favoriser le placement du second rotor (3) dans une position décalée latéralement par rapport au premier rotor (2) durant le travail.

Dans l'exemple représenté un organe de traction tel qu'un ressort (82) est accroché par l'une de ses extrémités à un axe (83) d'une patte (84) qui est solidaire de la partie (31) de la poutre de liaison (19). L'autre extrémité de ce ressort (82) coopère avec un vérin hydraulique (85) qui est articulé au moyen d'un axe (86) sur un bras de la poutre de traction (24). Ledit ressort (82) passe au-dessus de l'axe (4) sensiblement vertical du premier rotor (2). L'axe d'articulation (86) du vérin hydraulique (85) et l'axe d'articulation (83) du ressort (82) sont placés dans des plans verticaux passant chacun par le milieu de la poutre (19 et 24) correspondante. L'extrémité du ressort (82) qui coopère avec le vérin hydraulique (85), comporte une bague (87) avec un alésage (88) dont le diamètre est légèrement supérieur au diamètre de la tige (89) du vérin hydraulique (85). Cette tige (89) s'étend à travers cet alésage (88) avec un léger jeu et comporte à son extrémité située au-delà de la bague (87), à l'intérieur du ressort (82), un arrêt (90) dont les dimensions extérieures sont supérieures au diamètre de l'alésage (88). De cette manière il est possible de tendre le ressort (82) avec le vérin (85) en faisant rentrer sa tige (89). Cette opération peut avantageusement être combinée avec celle consistant à modifier l'orientation de l'axe (5) sensiblement vertical et des roues (9 et 10) du second rotor (3). Pour cela ce vérin hydraulique (85) est couplé aux tuyaux hydrauliques qui vont au vérin hydraulique (73) qui commande ledit axe (5). Ainsi, lorsque ce dernier vérin hydraulique (73) s'allonge pour orienter l'axe (5) et les roues (9 et 10) vers le côté, en vue de la mise en position de travail, l'autre vérin hydraulique (85) se raccourcit et tend le ressort (82) afin qu'il tire sur la poutre de liaison (19). A l'inverse, lorsque le vérin hydraulique (73) se raccourcit pour orienter l'axe (5) et les roues (9 et 10) dans la direction opposée, en vue de la mise en position de transport, le vérin hydraulique (85) s'allonge et détend le ressort (82).

Comme cela ressort de la figure 1, au travail, l'andaineur est déplacé dans la direction (A) à l'aide d'un tracteur. Les roues porteuses (9 et 10) roulent alors sur le sol. Le second rotor (3) est décalé latéralement par rapport au premier rotor (2). Ils sont disposés suivant une ligne oblique par rapport à la direction d'avancement (A) de sorte que leurs trajectoires se recouvrent partiellement. Le second rotor (3) est placé dans cette position au moyen du vérin hydraulique (73) qui oriente ses roues porteuses (9 et 10) et du dispositif de maintien (81). Les deux rotors (2 et 3) sont entraînés dans le même sens de rotation (F), autour de leurs axes supports (4 et 5), à partir de l'arbre de prise de force du tracteur. L'arbre d'entraînement (57) et le pignon (56) assurent alors l'entraînement du premier rotor (2). L'arbre de transmission (62) et les pignons (61 et 63) transmettent le mouvement du premier rotor (2) au second rotor (3). Par suite de cette rotation des rotors (2 et 3), les galets (18) situés aux extrémités des bras porte-fourches (14) se déplacent dans la came (17) qui est logée dans le carter (13) correspondant. Cette came (17) commande alors lesdits bras (14) de telle sorte que les fourches (15) soient dirigées vers le sol dans la partie avant de leur trajectoire et qu'elles pivotent vers le haut dans la partie latérale dans laquelle elles se déplacent vers l'arrière (vu dans la direction d'avancement (A)). Dans ladite partie avant, les fourches (15) ramassent le fourrage qui se trouve sur le sol. Ensuite elles le déposent sous la forme d'un andain grâce à leur pivotement dans la partie latérale de leur trajectoire. En raison de la disposition des deux rotors (2 et 3), l'andain formé par le rotor (2) le plus en avant est repris par l'autre rotor (3) qui forme un andain latéral de gros volume. Chacun des rotors (2 et 3) suit les dénivellations du sol indépendamment de l'autre grâce aux degrés de liberté que procurent l'articulation transversale (30) et l'articulation longitudinale (34) de la poutre de liaison (19). Les pivotements autour de l'articulation (34) sont toutefois limités par les butées (44 et 45) lorsqu'elles s'appuient contre les arrêts (42 et 43). Cela évite des débattements trop importants qui pourraient provoquer, dans des cas extrêmes, le renversement du rotor (3). En sus, l'angle de débattement peut être réglé au moyen des tiges filetées (49 et 50) qui permettent de modifier la distance entre les butées (44 et 45) et les arrêts (42 et 43). Enfin, les blocs (46 et 47) amortissent les chocs entre lesdites butées (44 et 45) et les arrêts (42 et 43) en cas de débattements brusques.

Pour transposer l'andaineur dans la position de transport représentée sur la figure 2, l'opérateur actionne les vérins hydrauliques (12) qui soulèvent les rotors (2 et 3) du sol. De cette manière la garde au sol est suffisante pour pouvoir déplacer la machine sur les routes et les chemins. Ensuite, il actionne le vérin hydraulique (73) afin qu'il se raccourcisse et tourne le manchon (70), l'axe support (5) et les roues porteuses (9 et 10) de telle sorte que ces dernières s'orientent dans une direction parallèle à la poutre de liaison (19). Simultanément le vérin hydraulique (85) du dispositif de maintien (81) s'allonge et détend le ressort (82). Il suffit alors de déplacer la machine dans la direction (A) pour que le second rotor (3) et la poutre de liaison (19) pivotent autour de l'axe (4) sensiblement vertical du premier rotor (2) et se placent derrière celui-ci. La largeur de la machine est alors considérablement réduite. Dans cette position le verrou (76) est poussé par le ressort (78) dans le logement de blocage (75) du manchon (70). Il immobilise l'axe (5) et les roues (9 et 10) et évite de ce fait le retour par inadvertance du second rotor (3) dans la position de travail. Dans les parties courbes de la trajectoire suivie par la machine, le second rotor (3) suit le premier rotor (2) à la manière d'une remorque. L'allongement du vérin hydraulique (85) est tel que l'arrêt (90) qui est fixé sur sa tige (89) est éloigné de la bague (87) du ressort (82). Celui-ci peut alors glisser librement sur ladite tige (89) du vérin (85), ce qui permet à la poutre de liaison (19) et au second rotor (3) de se déplacer vers la droite ou vers la gauche autour de l'axe (4) du premier rotor (2). Lors de ces déplacements le pignon (61) de l'arbre de transmission (62) se déplace sur la denture (53) de la couronne dentée (51). Cela évite de replier l'arbre de transmission (62) autour d'une articulation. Dans cette position les deux rotors (2 et 3) peuvent également bouger l'un par rapport à l'autre grâce aux articulations (30 et 34). Leurs roues (9 et 10) restent alors constamment en contact avec le sol durant les déplacements. Le dispositif (41) limite les débattements du rotor (3) autour de l'articulation (34).

Pour revenir dans la position de travail, l'opérateur retire le verrou (76) de son logement (75) dans le manchon (70) au moyen du câble (80). Ensuite, il actionne le vérin hydraulique (73) pour qu'il s'allonge et fasse tourner ledit manchon (70), l'axe (5) et les roues (9 et 10) de telle sorte que la direction de ces dernières forme un angle avec la poutre de liaison (19). En même temps le vérin hydraulique (85) se rétracte et tend le ressort (82). Dès que l'opérateur avance avec la machine, le second rotor (3) tourne avec la poutre de liaison (19) autour de l'axe (4) du premier rotor (2) et se décale latéralement. Dans cette position, le vérin hydraulique (85) et le ressort (82) exercent une traction sur la poutre de liaison (19) et aident à la maintenir en position de travail. En dernier lieu, les vérins hydrauliques (12) sont actionnés de telle sorte que la machine s'abaisse jusqu'à ce que les fourches (15) touchent le sol. Les deux rotors (2 et 3) peuvent alors à nouveau être entraînés en rotation.

Il est bien évident que l'invention n'est pas limitée au mode de réalisation décrit et représenté sur les dessins annexés. Des modifications sont possibles, notamment en ce qui concerne la constitution des divers éléments ou par substitution d'équivalents techniques, sans pour autant sortir du domaine de protection tel que défini dans les revendications.

## Revendications

1. Machine de fenaison, notamment une andaineuse de végétaux coupés, comportant un bâti (1) portant des rotors d'andainage (2 et 3) qui sont entraînés en rotation durant le travail autour d'axes (4 et 5) sensiblement verticaux, lequel bâti (1) comporte un premier rotor (2) et possède une poutre de liaison (19) qui est articulée sur un axe sensiblement vertical (4) et comporte un deuxième rotor (3) se situant à une certaine distance du premier rotor (2), ***caractérisée par le fait que*** la poutre de liaison (19) se compose de deux parties (31 et 32) articulées entre elles au moyen d'un axe d'articulation transversal (33) qui est sensiblement horizontal et permet au second rotor (3) de se déplacer en hauteur par rapport au premier rotor (2), que la deuxième partie (32) de la poutre (19) comporte une articulation longitudinale (34) permettant au second rotor (3) de pivoter autour d'un axe géométrique longitudinal (39) de la poutre (19) et **par le fait qu'**elle comporte un dispositif (41) de limitation des pivotements autour de cet axe longitudinal (39) qui comprend des butées (44 et 45) et des arrêts (42 et 43) comportant des amortisseurs (46 et 47).

2. Machine selon la revendication 1, ***caractérisée par le fait que*** la première partie (31) de la poutre (19) est articulée sur l'axe sensiblement vertical (4) du premier rotor (2).

3. Machine selon la revendication 1, ***caractérisée par le fait que*** la deuxième partie (32) de la poutre (19) comporte un manchon (35) avec un orifice intérieur de forme circulaire qui est lié à l'axe d'articulation transversal (33) et un tube (38) muni d'un embout cylindrique (36) qui est logé dans ledit manchon (35) de manière fixe en translation et libre en rotation.

4. Machine selon la revendication 3, ***caractérisée par le fait que*** les deux arrêts (42 et 43) du dispositif de limitation (41) sont solidaires du manchon (35) et que les deux butées (44 et 45) sont solidaires du tube (38) et coopèrent avec lesdits arrêts (42 et 43).

5. Machine selon la revendication 4, ***caractérisée par le fait que*** les arrêts (42 et 43) et les butées (44 et 45) se situent de part et d'autre du manchon (35).

6. Machine selon la revendication 1, ***caractérisée par le fait que*** les amortisseurs (46 et 47) sont constitués par des blocs en caoutchouc ou une matière analogue.

7. Machine selon la revendication 5, ***caractérisée par le fait que*** les butées (44 et 45) sont liées à un bras (48) qui est solidaire du tube (38).

8. Machine selon la revendication 7, ***caractérisée par le fait que*** la position des butées (44 et 45) par rapport aux arrêts (42 et 43) est réglable.

9. Machine selon la revendication 8, ***caractérisée par le fait que*** les butées (44 et 45) sont fixées sur des tiges filetées (49 et 50) vissées dans des trous taraudés du bras (48).

## Patentansprüche

1. Heuwerbungsmaschine, insbesondere Schwader für geschnittenes Pflanzengut, mit einem Gestell (1), das Schwadrotoren (2 und 3) trägt, die im Betrieb um im wesentlichen vertikale Achsen (4 und 5) drehangetrieben werden, wobei das Gestell (1) einen ersten Rotor (2) aufweist und einen Verbindungsträger (19) enthält, der an eine im wesentlichen vertikale Achse (4) angelenkt ist und einen sich in einem bestimmten Abstand vom ersten Rotor (2) befindenden zweiten Rotor (3) aufweist, ***dadurch gekennzeichnet,* daß** der Verbindungsträger (19) aus zwei Teilen (31 und 32) besteht, die mittels einer im wesentlichen horizontalen Quergelenkachse (33), die eine Höhenverschiebung des zweiten Rotors (3) bezüglich des ersten Rotors (2) gestattet, aneinander angelenkt sind, daß der zweite Teil (32) des Trägers (19) ein Längsgelenk (34) aufweist, das ein Schwenken des zweiten Rotors (3) um eine geometrische Längsachse (39) des Trägers (19) gestattet, und daß sie eine Vorrichtung (41) zur Begrenzung der Schwenkungen um diese Längsachse (39) aufweist, die Anschläge (44 und 45) und Halteelemente (42 und 43) mit Dämpfern (46 und 47) enthält.

2. Maschine nach Anspruch 1, ***dadurch gekennzeichnet,* daß** der erste Teil (31) des Trägers (19) an der im wesentlichen vertikalen Achse (4) des ersten Rotors (2) angelenkt ist.

3. Maschine nach Anspruch 1, ***dadurch gekennzeichnet,* daß** der zweite Teil (32) des Trägers (19) eine Muffe (35) mit einer kreisförmigen inneren Öffnung enthält, die mit der Quergelenkachse (33) verbunden ist und ein mit einem zylindrischen Endstück (36), das translationsfest und frei drehbar in der Muffe (35) angeordnet ist, versehenes Rohr (38) aufweißt.

4. Maschine nach Anspruch 3, ***dadurch gekennzeichnet*, daß** die beiden Halteelemente (42 und 43) der Begrenzungsvorrichtung (41) mit der Muffe (35) fest verbunden sind und die beiden Anschläge (44 und 45) mit dem Rohr (38) fest verbunden sind und mit den Halteelementen (42 und 43) zusammenwirken.

5. Maschine nach Anspruch 4, ***dadurch gekennzeichnet,* daß** sich die Halteelemente (42 und 43) und die Anschläge (44 und 45) auf beiden Seiten der Muffe (35) befinden.

6. Maschine nach Anspruch 1, ***dadurch gekennzeichnet,* daß** die Dämpfer (46 und 47) durch Blöcke aus Kautschuk oder einem vergleichbaren Material gebildet werden.

7. Maschine nach Anspruch 5, ***dadurch gekennzeichnet,* daß** die Anschläge (44 und 45) mit einem fest mit dem Rohr (38) verbundenen Arm (48) verbunden sind.

8. Maschine nach Anspruch 7, ***dadurch gekennzeichnet,* daß** die Position der Anschläge (44 und 45) bezüglich der Halteelemente (42 und 43) einstellbar ist.

9. Maschine nach Anspruch 8, ***dadurch gekennzeichnet,* daß** die Anschläge (44 und 45) an in mit Innengewinde versehene Löcher des Armes (48) geschraubte Gewindestangen (49 und 50) befestigt sind.

## Claims

1. Haymaking machine, particularly a windrower for cut plants, comprising a frame (1) carrying windrowing rotors (2 and 3) which are driven in rotation during work about substantially vertical axes (4 and 5), which frame (1) comprises a first rotor (2) and has a connecting beam (19) which is articulated to a substantially vertical axis (4) and comprises a second rotor (3) lying a certain distance away from the first rotor (2), ***characterized in* that** the connecting beam (19) is made up of two parts (31 and 32) articulated together by means of a transverse axis of articulation (33) which is substantially horizontal and allows the second rotor (3) to move heightwise with respect to the first rotor (2), that the second part (32) of the beam (19) comprises a longitudinal articulation (34) allowing the second rotor (3) to pivot about a longitudinal geometric axis (39) of the beam (19) and **in that** it comprises a device (41) for limiting the pivoting about this longitudinal axis (39) which device comprises buffers (44 and 45) and stops (42 and 43) comprising dampers (46 and 47).

2. Machine according to Claim 1, ***characterized in* that** the first part (31) of the beam (19) is articulated to the substantially vertical axis (4) of the first rotor (2).

3. Machine according to Claim 1, ***characterized in* that** the second part (32) of the beam (19) comprises a sleeve (35) with an inner orifice of circular shape, which is connected to the transverse axis of articulation (33) and a tube (38) fitted with a cylindrical endpiece (36) which is housed in the said sleeve (35) so that it is fixed in terms of translation and free in terms of rotation.

4. Machine according to Claim 3, ***characterized in* that** the two stops (42 and 43) of the limiting device (41) are secured to the sleeve (35) and **in that** the two buffers (44 and 45) are secured to the tube (38) arid cooperate with the said stops (42 and 43).

5. Machine according to Claim 4, ***characterized in* that** the stops (42 and 43) and the buffers (44 and 45) are located on each side of the sleeve (35).

6. Machine according to Claim 1, ***characterized in* that** the dampers (46 and 47) consist of blocks of rubber or of a similar material.

7. Machine according to Claim 5, ***characterized in* that** the buffers (44 and 45) are connected to an arm (48) which is secured to the tube (38).

8. Machine according to Claim 7, ***characterized in* that** the position of the buffers (44 and 45) with respect to the stops (42 and 43) is adjustable.

9. Machine according to Claim 8, ***characterized in* that** the buffers (44 and 45) are fixed on threaded rods (49 and 50) screwed into tapped holes in the arm (48).
